# EUROPEAN PATENT SPECIFICATION

(11) **EP 4 385 700 B1**
(45) Date of publication and mention of the grant of the patent: **23.07.2025**
(21) Application number: 23212121.0
(22) Date of filing: 24.11.2023
(51) Int. Cl.: B29B 13/06, B29B 13/02, F26B 17/14

(54) **ANALYSIS APPARATUS AND METHOD FOR INCOHERENT MATERIAL**
ANALYSEVORRICHTUNG UND -VERFAHREN FÜR INKOHÄRENTES MATERIAL
APPAREIL ET PROCÉDÉ D'ANALYSE POUR MATÉRIAU INCOHÉRENT

(30) Priority: 13.12.2022 IT 202200025488
(43) Date of publication of application: 19.06.2024
(73) Proprietor: Piovan S.P.A., 30036 Santa Maria di Sala (VE) (IT)
(72) Inventor: BELLIO, Enrico, 31050 Ponzano V.to (IT); CAPPELLINI, Davide, 26029 Soncino (CR) (IT)
(74) Representative: Luppi Intellectual Property S.r.l.

(56) References cited:
- WO-A1-2021/176370
- WO-A1-2022/023905
- US-A1- 2010 205 821
- US-B2- 8 793 900

## Description

### Background of the invention

The invention relates to an apparatus and a method for analyzing incoherent solid material, i.e. in the form of granules and/or microgranules and/or pellets and/or powder and/or flakes or the like, in particular for plastics like, for example, plastics obtained at least partially from post-consumer recycling (PCR). Prior art devices for analyzing incoherent solid material are known from WO2021/176370A1 and WO2022/023905A1.

Specifically, but not exclusively, the invention can be applied advantageously to characterize samples of incoherent plastics intended to be processed in a plant for treating incoherent plastics, like, for example, a plant for dehumidifying and/or drying and/or crystallizing and/or packaging and/or deodorizing and/or conveying in a vacuum and/or under pressure the incoherent plastics. This treatment plant can be designed, in particular, to feed a user machine, like for example a machine for processing and transforming plastics, in particular an extruder that supplies an injection and/or blow and/or compression moulding apparatus.

In the food packaging industry and not only there, there is for example an increasing request for making products out of plastics with a percentage of material obtained from post-consumer recycling (PCR). This entails the need to check for the presence of contaminating and/or odorous substances.

It is known that in a process of drying and/or dehumidifying polymer granules obtained from post-consumer recycling material, contaminating and/or odorous substances like, for example, so-called NIAS (Non-Intentionally Added Substances) are released, in particular by r_PET, or the so-called VOC (volatile organic compounds), in particular by recycled polyolefins (r_PP, r_PE, r_HDPE). These substances can also be freed during the use of the finished product.

In the plastics processing industry, it is desirable to assess beforehand the most suitable treatment actions for the material used, especially in the case of post-consumer recycled material. If, for example, a batch of material to be treated has a considerable concentration of contaminating and/or odorous substances, it would be preferable to adopt counter measures already in the first stages of the production process in order to ensure the high quality of the end product.

This evaluation is particularly important for material obtained from recycling that, in general, at ambient temperature might not have odours that on the other hand become perceptible at higher temperatures.

### Summary of the invention

One object of the invention is to devise an analysis apparatus and/or method that is able to overcome the aforesaid limits and drawbacks of the prior art.

One object of the invention is to make available an analysis apparatus and/or method that is usable for characterizing incoherent solid material intended to be used in a processing process.

One object of the invention is to provide an analysis apparatus and/or method for detecting odorous and/or contaminating substances in incoherent plastics, in particular material obtained from post-consumer recycling.

One object of the invention is to give rise to an analysis apparatus and/or method for analyzing rapidly and efficiently the incoherent plastics entering and/or exiting a given treatment process (for example dehumidification and/or drying and/or deodorization).

One advantage is enabling the treatment methods to be evaluated in advance that are most suitable on the basis of the material used.

One advantage is to provide an analysis apparatus and/or method for analyzing incoherent plastics without degrading and/or altering the plastics.

One advantage is determining rapidly the presence, quality, chemical nature and quantity of odorous and/or contaminating substances contained in and unintentionally added to a batch of incoherent plastics.

One advantage is analyzing a batch of incoherent solid material to determine a characteristic trace of the batch and to store the trace in order to be able to compare the trace with other traces determined on other batches of the same material.

One advantage is to make possible an analysis of a finished product or parts of a finished product in order to ensure traceability of the specific characterization of the product in terms of odorous and/or contaminating substances.

One advantage is permitting analyzing incoherent plastics - in particular incoherent plastics comprising, wholly or partially, material obtained from post-consumer recycling - in a rapid, simple and easily repeatable manner and without resorting to highly qualified personnel.

One advantage is obtaining a rapid and effective analysis of a not insignificant quantity of a sample of material, for example of the order of kilograms and anyway significantly greater, for example, than the quantity (of the order of grams) normally requested by analysis by gas chromatography.

One advantage is to provide an analysis apparatus that is versatile and easily integrable into a treatment apparatus for incoherent plastics.

One advantage is to devise an analysis apparatus that is easily portable and able to rapidly perform an analysis without the need for specific and complex preparatory steps, for example for sampling material, setting up equipment, training specialist technicians, etc.

Such objects and advantages, and still others, are achieved by an apparatus and/or a method according to one or more of the claims set out below.

In one embodiment, an analysis method comprises the steps of: introducing incoherent plastics, in particular material wholly or at least partially obtained from post-consumer recycling, into a containing volume less than 50 dm³; introducing into the containing volume a process gas that may have been dehumidified by a dehumidification process with compression and subsequent expansion of the gas and/or may have been dried by a heating process; detecting odorous features of the process gas present in the containing volume and/or of the process gas extracted from the containing volume; and characterizing the incoherent material on the basis of a comparison between the detected odorous features and stored data.

### Brief description of the drawings

The invention can be better understood and implemented with reference to the attached drawings that illustrate an embodiment thereof by way of non-limiting example, in which:

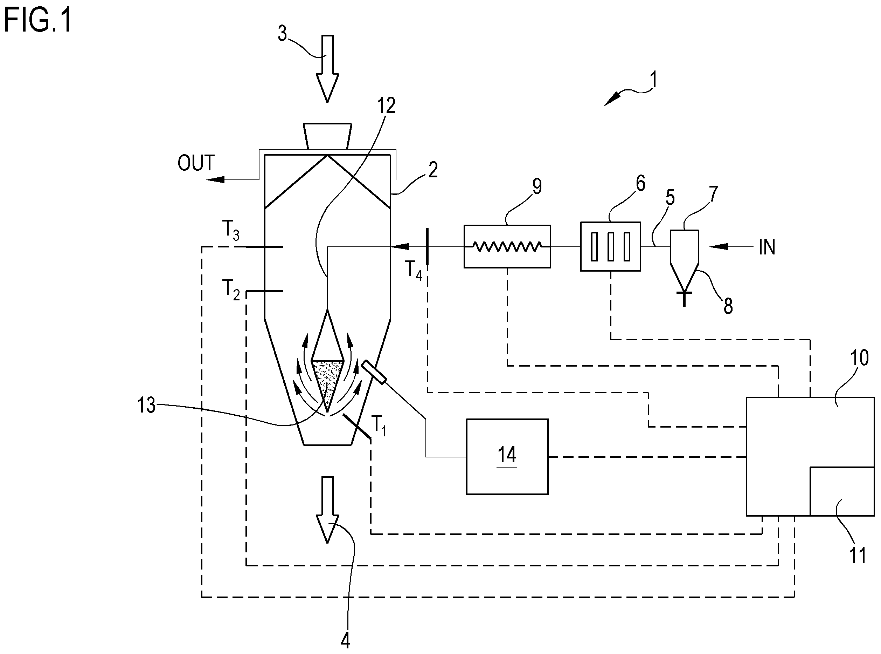

Figure 1 shows a diagram of one embodiment of an analysis apparatus made in accordance with the present invention.

### Detailed description

With reference to Figure 1, with 1 an analysis apparatus has been indicated overall that comprises at least one container 2 configured to define a containing volume for containing incoherent material.

Incoherent material means solid material in the form of granules and/or microgranules and/or pellets and/or powder and/or flakes or the like.

The incoherent material to be analyzed by the analysis apparatus 1 may comprise, in particular, plastics. The incoherent material to be analyzed may comprise, in particular, plastics obtained at least partially from post-consumer recycling (PCR). The incoherent material to be analyzed may comprise, in particular, a virgin plastics part and a plastics part obtained from post-consumer recycling (PCR). The incoherent material to be analyzed may comprise, in particular, only plastics obtained from post-consumer recycling (PCR). The incoherent material to be analyzed may comprise, in particular, plastics wholly or at least partly obtained from post-consumer recycling (PCR) processed in the form of pellets.

The containing volume may be, in particular, greater than 1 dm³. The containing volume may be, in particular, less than 5 dm³. The containing volume may be, in particular, less than 10 dm³. The containing volume may be, in particular, less than 15 dm³. The containing volume may be, in particular, less than 20 dm³. The containing volume may be, in particular, less than 30 dm³. The containing volume may be, in particular, less than 50 dm³. The containing volume may be, in particular, greater than 2 dm³. The containing volume may be, in particular, greater than 5 dm³. The containing volume may be, in particular, comprised between 1 dm³ and 50 dm³. The containing volume may be, in particular, comprised between 1 dm³ and 30 dm³. The containing volume may be, in particular, comprised between 1 dm³ and 20 dm³.

The containing volume may be, in particular, defined at least partly by at least one wall of the container 2 made of transparent material, in particular of glass. The container 2 may comprise, in particular, at least one container wall of cylindrical or frustoconical shape. The container 2 may comprise, in particular, at least one lower wall of frustoconical shape. The container 2 may comprise, in particular, at least one upper wall of cylindrical shape.

The container 2 may comprise, in particular, a container axis, that, in a position of use of the analysis apparatus 1 (Figure 1), is arranged vertically.

The analysis apparatus 1 may comprise, in particular, a material inlet 3 arranged to introduce material into an upper zone of the containing volume. The analysis apparatus 1 may comprise, in particular, a material outlet 4 arranged to extract material from a lower zone of the containing volume. The container 2 may comprise, in particular, a hopper for loading the material from above and unloading the material from below. The material may descend, in particular, from the material inlet 3 above the lower material outlet 4 through the effect of gravity. The containing volume defined by the container 2 may be supplied with the incoherent material by batch-type feeding or by continuous feeding.

The analysis apparatus 1 may comprise, in particular, a gas path 5 along which a flow of a process gas flows intended to process the incoherent material contained in the containing volume. The process gas may comprise, in particular, air. The process gas may comprise, in particular, air taken from the environment. The gas path 5 may comprise, in particular, an input IN through which the air enters, for example air that is taken from the environment and then processed along the gas path 5. The process gas may comprise, in particular, zero air, i.e. air treated to reduce the concentration of undesired substances, in particular organic substances, like for example hydrocarbons, and/or water vapor. In other embodiments the process gas may comprise, in particular, an inert gas.

The analysis apparatus 1 may comprise, in particular, a compressed-gas dehumidifier 6, i.e. a dehumidifier 6 configured to exploit the dehumidification effect of a gas by compression of the gas and subsequent decompression with resulting expansion of the gas (for example with 6 bar compression followed by decompression to ambient pressure). The compressed-gas dehumidifier 6 is arranged in the gas path 5 to dehumidify the process gas. It should be noted that, by definition, in a compressed-gas dehumidifier, a compressor operates to compress the process gas itself (to be dehumidified), so a compressed gas dehumidifier operates in the same process gas path to dehumidify the process gas exploiting the dehumidification effect of a gas through compression and subsequent expansion of the same gas to be dehumidified.

The compressed-gas dehumidifier 6 may be configured, in particular, to dehumidify the process gas to a dewpoint value below +15 °C. The compressed-gas dehumidifier 6 may be configured, in particular, to dehumidify the process gas to a dewpoint value below +5 °C. The compressed-gas dehumidifier 6 may be configured, in particular, to dehumidify the process gas to a dewpoint value below -5 °C. The compressed-gas dehumidifier 6 may be configured, in particular, to dehumidify the process gas to a dewpoint value comprised between -55 °C and +15 °C.

The compressed-gas dehumidifier 6 may be configured, in particular, to compress the process gas to a pressure value above 2 bar, or above 3 bar, or above 4 bar, or above 5 bar, for example about 6 bar or above 6 bar. The process gas is first compressed by the compressed-gas dehumidifier 6 and is then decompressed (in general to atmospheric pressure) with resulting expansion, which entails a modification of the absolute humidity value, or of the dewpoint value, of the expanded gas with respect to the compressed gas, so that, specifically, the expansion modifies the dewpoint value by making the dewpoint value more negative, for example by going from a dewpoint value of +4 °C to a value of -25 °C after expansion.

The analysis apparatus 1 may comprise, in particular, a purifying filter 7 arranged in the gas path 5 to filter volatile organic compounds in the process gas.

The purifying filter 7 may be configured, in particular, to reduce the concentration of volatile organic compounds like, for example, benzene, limonene, acetaldehyde, toluene, aldehydes, hydrocarbons, alcohols, etc. The purifying filter 7 may be configured, in particular, to reduce the concentration of total volatile organic compounds (TVOC) in the process gas down to a value below 50.0 ppm, or down to a value below 40.0 ppm, or down to a value below 30.0 ppm, or down to a value below 20.0 ppm, or down to a value below 10.0 ppm.

The analysis apparatus 1 may comprise, in particular, a dust filter 8 arranged in the gas path 5 to filter solid particles from the process gas. The dust filter 8 may be configured, in particular, to retain the particles down to an aerodynamic diameter greater than 10 µm, or down to an aerodynamic diameter greater than 8 µm, or down to an aerodynamic diameter greater than 6 µm, or down to an aerodynamic diameter greater than 4 µm, or down to an aerodynamic diameter greater than 2 µm.

The purifying filter 7 and the dust filter 8 may be, in particular, integrated into a single filtering device. The purifying filter 7 may comprise, in particular, an adsorption filter, for example an active carbon filter. The dust filter 8 may comprise, in particular, a mechanical filter.

The purifying filter 7 may be provided, in particular, with a coalescence filter (for example, a coalescence cartridge) to separate oily particles from the process gas. The coalescence filter may be configured, in particular, to retain oily particles down to an aerodynamic diameter greater than 0.1 µm, or down to an aerodynamic diameter greater than 0.01 µm. The presence of oily particles in the process gas may be caused by the generator of the flow of process gas that may comprise, in particular, at least one compressor, for example a (screw or lobe) rotary compressor.

The analysis apparatus 1 may comprise, in particular, a heater 9 arranged in the gas path 5 to heat the process gas. The heater 9 may be, in particular, thermostated. The heater 9 may be configured, in particular, to heat the process gas to a temperature value above 40 °C, or above 80 °C, or above 120 °C. It is possible to provide, in particular, a temperature set point value supplied to a processor 10 configured to control the heater 9, for example by a user graphic interface 11. The temperature set point value may be selected on the basis of the type of material to be analyzed. The processor 10 may comprise, in particular, a programmable electronic control unit. The processor 10 may comprise, in particular, a microprocessor or a PLC.

The processor 10 may be configured, in particular, to control the compressed-gas dehumidifier 6 so as to obtain a desired degree (for example, a dewpoint value) of dehumidification of the process gas.

It is possible to provide, as in the illustrated embodiment, for the compressed-gas dehumidifier 6 to be arranged along the gas path 5 before the heater 9. It is possible to provide, as in the illustrated embodiment, for the purifying filter 7 to be arranged before the compressed-gas dehumidifier 6. It is possible to provide, as in the illustrated embodiment, for the dust filter 8 to be arranged before the compressed-gas dehumidifier 6. It is possible to provide, as in the illustrated embodiment, for the purifying filter 7 to be arranged before the heater 9. It is possible to provide, as in the illustrated embodiment, for the dust filter 8 to be arranged before the heater 9. It is possible to provide, as in the illustrated embodiment, for the heater 9, the compressed-gas dehumidifier 6, the dust filter 8 and the purifying filter 7 to be arranged outside the container 2.

The analysis apparatus 1 may comprise one or more temperature sensors for measuring the temperature of the material and/or of the process gas.

In particular, the analysis apparatus 1 may comprise at least one first temperature sensor T1 arranged to detect the temperature inside the containing volume at a lower zone of the volume, for example in a zone of the containing volume near the diffuser 13 or in a zone of the containing volume near the material outlet 4 or in a zone of the containing volume defined by the frustoconical lower portion.

In particular, the analysis apparatus 1 may comprise at least one second temperature sensor T2 arranged to detect the temperature in a zone of the containing volume arranged at a vertical height above the diffuser 13 and/or above the first temperature sensor T1.

In particular, the analysis apparatus 1 may comprise at least one third temperature sensor T3 arranged to detect the temperature in a zone of the containing volume arranged at a vertical height above the second temperature sensor T2 and below the gas outlet OUT.

In particular, the analysis apparatus 1 may comprise at least one fourth temperature sensor T4 arranged to detect the temperature in a zone of the gas path 5 of the process gas arranged downstream of the heater 9. In particular, the fourth temperature sensor T4 may be used to control the heating station of the process gas.

The analysis apparatus 1 may comprise, in particular, a conduit 12 arranged in the containing volume to convey the flow of process gas and to deliver the process gas to a zone inside the containing volume. The conduit 12 is arranged inside the containing volume, but without the incoherent solid material being present inside the conduit 12 itself.

The conduit 12 may comprise, in particular, at least one conduit portion that has a (vertical) longitudinal axis extending parallel or coaxially to the container axis.

The conduit 12 may terminate, in particular, with a diffuser 13 (arranged at a lower end of the aforesaid conduit portion) through which the process gas exits the conduit 12 to enter the containing volume.

The diffuser 13 may be, in particular, so arranged in a central zone of the containing volume that the diffuser 13 may be surrounded all around laterally by the incoherent material contained in the containing volume. The incoherent material contained in the containing volume may also occupy a zone below and a zone above the diffuser 13.

The diffuser 13 may be arranged, in particular, at or near the container axis. The diffuser 13 may be arranged, in particular vertically above the material outlet 4. The diffuser 13 may be arranged, in particular, at a height that is such that at least one part of the diffuser 13, or the entire diffuser 13, is surrounded laterally by the lower wall of frustoconical shape of the container 2. The diffuser 13 may comprise, in particular, an outlet portion of the gas of conical or frustoconical shape that is coaxial with the lower wall of frustoconical shape of the container 2 and/or coaxial with a vertical axis of the material outlet 4.

The analysis apparatus 1 may comprise, in particular, a gas outlet OUT arranged to enable the process gas to exit a zone of the containing volume arranged above the diffuser 13. The gas outlet OUT may be, in particular, arranged in an upper portion of the container 2.

The analysis apparatus 1 may comprise, in particular, at least one odour sensor 14 arranged to detect odorous features of the process gas. The odour sensor 14 may, in particular (as in the illustrated embodiment), communicate with a zone of the containing volume to sample and then analyze the process gas present in the containing volume. The process gas sampling point connected to the odour sensor 14 may be, in particular, arranged at the same height as at least one portion of the diffuser 13.

The odour sensor 14 may comprise, in particular, an electronic nose (for example, of known type) provided with a series of sensors configured to analyze the concentration of the odorous and/or contaminating substances of interest like, for example, benzene, limonene, toluene, acetaldehyde, other aldehydes, other hydrocarbons, etc.

In other embodiments, which are not illustrated, it is possible to arrange an odour sensor connected to a gas sampling point communicating with the gas outlet OUT to sample and then analyze the process gas extracted from the containing volume. It is possible to provide for the odorous features being detected of both the process gas present in the containing volume, and the process gas extracted from the containing volume, for example by placing in communication the odour sensor 14 not only with a zone inside the containing volume, but also with the gas outlet OUT or with a zone near the gas outlet OUT, or by using two distinct odour sensors.

It is nevertheless possible to provide (in addition or alternatively to the odour sensor 14) for the use of an odour sensor communicating with a sampling zone arranged in the containing volume between the diffuser 13 and the gas outlet OUT (i.e. a sampling zone located at a height above the diffuser 13 and below the gas outlet OUT), or of other odour sensors arranged in other zones of the containing volume.

The analysis apparatus 1 may comprise, as said, the processor 10 that is connected to the various actuators and to the various sensors of the apparatus.

The processor 10 may comprise, in particular, a calculating unit configured to make a comparison between the data detected by the odour sensor 14 (or by the odour sensors) and stored data and to define characterization of the incoherent material on the basis of the aforesaid comparison.

The analysis of the incoherent material can be performed by actuating an analysis method, in particular by making use of the analysis apparatus 1. The analysis method may be actuated, in particular, to analyze a sample of incoherent material comprising plastics, in particular plastics comprising at least partly post-consumer recycling plastics, in particular post-consumer recycling plastics in the form of pellets.

The analysis method comprises the step of introducing (for example with a batch type supply) a quantity of incoherent material in the containing volume defined by the container 2. The analysis method may comprise, in particular, the step of generating a flow of a process gas along the gas path 5 to a diffuser 13 arranged in the containing volume. The diffuser 13 is completely surrounded by the incoherent material contained in the containing volume.

The analysis method may comprise, in particular, the step of dehumidifying the process gas along the gas path to a desired dewpoint value below +15 °C, in particular by using the dehumidifier 6 that operates by compressing and subsequently expanding the process gas.

The analysis method may comprise, in particular, the step of reducing the concentration of volatile organic compounds in the process gas along the gas path 5 to a desired value of the concentration of total volatile organic compounds (TVOC) below 50.0 ppm, or below 40.0 ppm, or below 30.0 ppm, or below 20.0 ppm, or below 10.0 ppm.

The analysis method may comprise, in particular, the step of filtering the process gas along the gas path 5 to retain the particles with a desired limit value of the aerodynamic diameter greater than 10 µm, or greater than 8 µm, or greater than 6 µm, or greater than 4 µm, or greater than 2 µm.

The analysis method may comprise, in particular, the step of filtering the process gas along the gas path 5 to retain the oily particles with a desired limit value of the aerodynamic diameter greater than 0.1 µm, or greater than 0.01 µm.

The analysis method may comprise, in particular, the step of heating the process gas along the gas path 5 up to a desired temperature value above 40 °C, or above 80 °C, or above 120 °C.

The analysis method may comprise, in particular, the step of extracting the process gas from a zone of the containing volume arranged above the diffuser 13.

The analysis method may comprise, in particular, the step of detecting odorous features of the process gas present in the containing volume and/or of the process gas extracted from the containing volume.

The analysis method may comprise, in particular, the steps of comparing the detected odorous features with stored data and of characterizing the incoherent material on the basis of the aforesaid comparison.

It is possible to provide for the flow of the process gas that flows in the gas path 5 and that enters the containing volume being controlled by flowrate control means (controlled by the processor 10) that is able to vary the flowrate of the process gas, in particular in function of the type of material to be analyzed. The flowrate control means may comprise, for example, at least one compressor and/or at least one flowrate control valve.

The container 2 may comprise, in particular, a drying and/or dehumidifying hopper of relatively reduced dimensions, suitable for being easily conveyed and used to analyze material samples. The hopper is equipped with means (diffuser 13) that diffuses a flow of process gas inside the containing volume defined by the hopper.

The process gas is heated by the heater 9 to a desired temperature on the basis of the type of material to be analyzed (polymer granules) to avoid damage to the material and permit effective extraction of the odorous and/or contaminating substances (in particular VOC and NIAS).

The process gas (air) may be dehumidified before entering the containing volume, to reduce the humidity content to a desired dewpoint value in function of the type of material to be analyzed, in particular considering the different capacity that each polymer may have of releasing more or less easily the odorous and/or contaminating substances according to the degree of humidity of the process gas.

In particular, the dehumidifier 6 may act as a veritable stabilizer of the degree of humidity of the process gas, i.e. be capable of ensuring a stable and accurate value of the dewpoint value of the process gas. The dehumidifier operates, in particular, by the technique (used for example in so-called compressed-air dehumidifiers) of compressing and subsequently expanding the gas to be dehumidified, with the possibility of obtaining dewpoint values comprised, in particular, between +15 °C and -55 °C.

The dehumidifying and purifying system used in the analysis apparatus 1 and in the corresponding analysis method may comprise, in particular, a so-called zero-air generator, in particular with an integrated compressor, configured to supply air with reduced humidity and organic substances content.

As said, the process gas that is analyzed by the odour sensor 14 may be detected directly in the zone of the containing volume situated near the inlet of the process gas in the volume itself, i.e. near the diffuser 13, i.e. in the zone where extracting the odorous and/or contaminating substances from the material is most concentrated, or may be extracted at the outlet of the containing volume (near the gas outlet OUT), or in an intermediate zone of the containing volume comprised between the diffuser 13 and the gas outlet OUT, or by combining the modes of extracting from two or more sampling points, for example with a system configured to analyze in an alternating manner the gas coming from two or more sampling points and/or with a system configured to analyze a mixture of the gases coming from two or more sampling points.

The temperature sensor means (for example the sensors T1, T2 and T3 arranged, respectively, in a lower, intermediate and upper zone of the containing volume) enable a thermal profile to be obtained inside the containing volume.

The processor 10 may be programmed to control the analysis apparatus 1 with a series of desired values (in particular, temperature, humidity and flowrate of the process gas) that make up a sort of specific recipe, in particular chosen in function of the type of material. The processor 10 may be configured, in particular, to view on the user graphic interface 11 in real time an image that shows a profile along a temporal axis of the odorous features of the analyzed material (for example, a profile of the concentrations detected over time) and/or an image that shows an instantaneous value showing the odorous features of the analyzed material (for example, a numeric value of the concentration detected at that instant, typically expressed in ppm or ppb).

The calculating unit of the processor 10 is configured to compare the values detected by the odour sensor 14 with the values stored in a database, for example in such a manner that the detected values are assigned to a determined substance or family of substances and as a result the analyzed material is assigned to a predetermined category of materials, so as to identify and characterize the sample of analyzed material and thus permit an appropriate treatment setting of the material.

### Legend:

- 1: analysis apparatus
- 2: container
- 3: material inlet
- 4: material outlet
- 5: gas path
- 6: dehumidifier
- 7: purifying filter
- 8: dust filter
- 9: heater
- 10: processor
- 11: user graphic interface
- 12: conduit
- 13: diffuser
- 14: odour sensor
- IN: gas inlet
- OUT: gas outlet
- T1: first temperature sensor
- T2: second temperature sensor
- T3: third temperature sensor
- T4: fourth temperature sensor

## Claims

1. Analysis apparatus (1), comprising:
- a container (2) which defines a containing volume for incoherent material, said containing volume being less than 50 dm³, said container (2) comprising a container axis which, in a position of use of the analysis apparatus, is arranged vertically;
- a material inlet (3) arranged to introduce material into an upper zone of said containing volume;
- a material outlet (4) arranged to extract material from a lower zone of said containing volume;
- a gas path (5) of a flow of a process gas intended to process incoherent material in said containing volume;
- a compressed gas dehumidifier (6), i.e. a dehumidifier configured to exploit the dehumidification effect of a gas by compressing and subsequently expanding the gas, arranged in said gas path (5) to dehumidify the process gas;
- a heater (9) arranged in said gas path (5) to heat the process gas to a temperature higher than 40°C;
- a conduit (12) arranged in said containing volume to transport said flow of a process gas and provided with a diffuser (13) arranged to diffuse the process gas in said containing volume so that said diffuser (13) can be surrounded by the incoherent material contained in said containing volume;
- a gas outlet (OUT) for extracting process gas from a zone of said containing volume arranged above said diffuser (13);
- an odour sensor (14) arranged to detect odorous features of the process gas present in said containing volume and/or of the process gas extracted from said containing volume;
- a calculation unit configured to perform a comparison between data detected by said odour sensor (14) and stored data and to characterize the incoherent material on the basis of said comparison.

2. Apparatus according to claim 1, wherein said conduit (12) extends with a longitudinal axis that is parallel or coincident with said container axis and/or wherein said diffuser (13) is arranged at said container axis.

3. Apparatus according to claim 1 or 2, wherein said compressed gas dehumidifier (6) is arranged before said heater (9).

4. Apparatus according to any one of the preceding claims, wherein said containing volume is comprised between 1 dm³ and 20 dm³.

5. Apparatus according to any one of the preceding claims, wherein said compressed gas dehumidifier (6) is configured to dehumidify the process gas to a dewpoint value below +15 °C, or below +5 °C.

6. Apparatus according to any one of the preceding claims, comprising a purifying filter (7) arranged in said gas path (5) for filtering volatile organic compounds in the process gas down to a total volatile organic compound (TVOC) concentration lower than 30 ppm in the process gas; said purifying filter () being, in particular, arranged before said dehumidifier (6).

7. Apparatus according to claim 6, wherein said purifying filter (7) comprises an activated carbon filter; said purifying filter (7) comprising, in particular, a coalescence filter for separating oily particles.

8. Apparatus according to any one of the preceding claims, comprising a dust collector filter (8) arranged in said gas path (5); said dust collector filter (8) being, in particular, arranged before said dehumidifier (6).

9. Apparatus according to any one of the preceding claims, wherein said containing volume is defined at least in part by at least one wall of said container (2) made of transparent material, in particular glass.

10. Analysis method for analyzing incoherent material, in particular making use of an analysis apparatus (1) according to any one of the preceding claims, said method comprising the steps of:
- introducing incoherent material into a containing volume **less than 50 dm³;**
- generating a flow of a process gas along a gas path (5) up to a diffuser (13) arranged in said containing volume and surrounded by the incoherent material contained in said containing volume;
- dehumidifying the process gas along said gas path (5) by means of a compressed gas dehumidifier (6) which operates by means of a compression and subsequent expansion of the gas;
- heating the process gas along said gas path (5) to a temperature higher than 40°C, in particular higher than 80°C;
- extracting process gas from a zone of said containing volume arranged above said diffuser (13);
- detecting odorous features of the process gas present in said containing volume and/or extracted from said containing volume;
- comparing the detected odorous features with stored data and characterizing the incoherent material on the basis of said comparison.

11. Method according to claim 10, wherein said incoherent material comprises plastic material, in particular plastic material comprising at least partially post-consumer recycled plastic material, in particular post-consumer recycled plastic material in pellet form.

12. Method according to claim 10 or 11, comprising the step of reducing concentration of volatile organic compounds in the process gas along said gas path to a value of total volatile organic compounds lower than 30 ppm.

13. Method according to any one of claims 10 to 12, comprising the step of filtering the process gas along said gas path to eliminate solid particles with an aerodynamic diameter greater than 10 µm.

14. Method according to any one of claims 10 to 13, wherein the process gas is dehumidified by said compressed gas dehumidifier (6) to a dewpoint value lower than +15 °C, or lower than +5 °C.

## Patentansprüche

1. Analysevorrichtung (1), umfassend:
- einen Behälter (2), der ein Behältervolumen für inkohärentes Material definiert, wobei das Behältervolumen weniger als 50 dm³ beträgt, der Behälter (2) umfassend eine Behälterachse, die in einer Verwendungsposition der Analysevorrichtung vertikal angeordnet ist;
- einen Materialeinlass (3), der angeordnet ist, um Material in eine obere Zone des Behältervolumens einzuführen;
- einen Materialauslass (4), der angeordnet ist, um Material aus einer unteren Zone des Behältervolumens zu entnehmen;
- einen Gasweg (5) eines Stroms eines Prozessgases, der dazu vorgesehen ist, inkohärentes Material in dem Behältervolumen zu prozessieren;
- einen Druckgasentfeuchter (6), d. h. einen Entfeuchter, der konfiguriert ist, um die Entfeuchtungswirkung eines Gases durch Komprimieren und anschließendes Ausdehnen des Gases auszunutzen, der in dem Gasweg (5) angeordnet ist, um das Prozessgas zu entfeuchten;
- einen Heizer (9), der in dem Gasweg (5) angeordnet ist, um das Prozessgas auf eine Temperatur von über 40°C zu erhitzen;
- eine Leitung (12), die in dem Behältervolumen angeordnet ist, um den Strom eines Prozessgases zu transportieren, und die mit einem Diffusor (13) versehen ist, der angeordnet ist, um das Prozessgas in dem Behältervolumen zu diffundieren, sodass der Diffusor (13) von dem inkohärenten Material umgeben sein kann, das in dem Behältervolumen beinhaltet ist;
- einen Gasauslass (OUT) zum Entnehmen von Prozessgas aus einer Zone des Behältervolumens, die über dem Diffusor (13) angeordnet ist;
- einen Geruchssensor (14), der angeordnet ist, um Geruchsmerkmale des Prozessgases, das in dem Behältervolumen vorhanden ist, und/oder des Prozessgases zu erfassen, das aus dem Behältervolumen entnommen wird;
- eine Berechnungseinheit, die konfiguriert ist, um einen Vergleich zwischen Daten, die durch den Geruchssensor (14) erfasst werden, und gespeicherten Daten durchzuführen und um das inkohärente Material basierend auf dem Vergleich zu kennzeichnen.

2. Vorrichtung nach Anspruch 1, wobei sich die Leitung (12) mit einer Längsachse erstreckt, die parallel zu der Behälterachse ist oder mit dieser zusammenfällt, und/oder wobei der Diffusor (13) an der Behälterachse angeordnet ist.

3. Vorrichtung nach Anspruch 1 oder 2, wobei der Druckgasentfeuchter (6) vor dem Heizer (9) angeordnet ist.

4. Vorrichtung nach einem der vorstehenden Ansprüche, wobei das Behältervolumen zwischen 1 dm³ und 20 dm³ beträgt.

5. Vorrichtung nach einem der vorstehenden Ansprüche, wobei der Druckgasentfeuchter (6) konfiguriert ist, um das Prozessgas auf einen Taupunktwert unter +15°C oder unter +5°C zu entfeuchten.

6. Vorrichtung nach einem der vorstehenden Ansprüche, umfassend einen Reinigungsfilter (7), der in dem Gasweg (5) angeordnet ist, zum Filtern von flüchtigen organischen Verbindungen in dem Prozessgas bis auf eine Gesamtkonzentration flüchtiger organischer Verbindungen (TVOC) von weniger als 30 ppm in dem Prozessgas; wobei der Reinigungsfilter () insbesondere vor dem Entfeuchter (6) angeordnet ist.

7. Vorrichtung nach Anspruch 6, wobei der Reinigungsfilter (7) einen Aktivkohlefilter umfasst; der Reinigungsfilter (7) umfassend insbesondere einen Koaleszenzfilter zum Abtrennen von öligen Partikeln.

8. Vorrichtung nach einem der vorstehenden Ansprüche, umfassend einen Staubsammelfilter (8), der in dem Gasweg (5) angeordnet ist; wobei der Staubsammelfilter (8) insbesondere vor dem Entfeuchter (6) angeordnet ist.

9. Vorrichtung nach einem der vorstehenden Ansprüche, wobei das Behältervolumen mindestens teilweise durch mindestens eine Wand des Behälters (2) aus transparentem Material, insbesondere Glas, definiert ist.

10. Verfahren zum Analysieren von kohärentem Material insbesondere unter Verwendung einer Analysevorrichtung (1) nach einem der vorstehenden Ansprüche, das Verfahren umfassend die Schritte:
- Einführen von inkohärentem Material in ein Behältervolumen von **weniger als 50 dm³;**
- Erzeugen eines Stroms eines Prozessgases entlang eines Gaswegs (5) bis zu einem Diffusor (13), der in dem Behältervolumen angeordnet und von dem inkohärenten Material umgeben ist, das in dem Behältervolumen beinhaltet ist;
- Entfeuchten des Prozessgases entlang des Gaswegs (5) mittels eines Druckgasentfeuchters (6), der mittels einer Kompression und einer anschließenden Ausdehnung des Gases funktioniert;
- Erhitzen des Prozessgases entlang des Gaswegs (5) auf eine Temperatur über 40 °C, insbesondere über 80 C;
- Entfernen von Prozessgas aus einer Zone des Behältervolumens, die über dem Diffusor (13) angeordnet ist;
- Erfassen von Geruchsmerkmalen des Prozessgases, das in dem Behältervolumen vorhanden ist und/oder aus dem Behältervolumen entfernt wird;
- Vergleichen der erfassten Geruchsmerkmale mit gespeicherten Daten und Kennzeichnen des inkohärenten Materials basierend auf dem Vergleich.

11. Verfahren nach Anspruch 10, wobei das inkohärente Material Kunststoffmaterial umfasst, insbesondere Kunststoffmaterial, umfassend mindestens teilweise Post-Consumer Recycling-Kunststoffmaterial, insbesondere Post-Consumer Recycling-Kunststoffmaterial in Pelletform.

12. Verfahren nach Anspruch 10 oder 11, umfassend den Schritt zum Reduzieren der Konzentration flüchtiger organischer Verbindungen in dem Prozessgas entlang des Gaswegs auf einen Gesamtwert flüchtiger organischer Verbindungen von weniger als 30 ppm.

13. Verfahren nach einem der Ansprüche 10 bis 12, umfassend den Schritt zum Filtern des Prozessgases entlang des Gaswegs, um feste Partikel mit einem aerodynamischen Durchmesser von mehr als 10 µm zu beseitigen.

14. Verfahren nach einem der Ansprüche 10 bis 13, wobei das Prozessgas durch den Druckgasentfeuchter (6) auf einen Taupunktwert von weniger als +15 C oder weniger als +5 C entfeuchtet wird.

## Revendications

1. Appareil d'analyse (1), comprenant:
- un contenant (2) qui définit un volume de contenant prévu pour un matériau incohérent, ledit volume de contenant étant inférieur à 50 dm³, ledit contenant (2) comprenant un axe de contenant qui, dans une position d'utilisation de l'appareil d'analyse, est agencé verticalement;
- une entrée de matériau (3) agencée pour introduire du matériau dans une zone supérieure dudit volume de contenant;
- une sortie de matériau (4) agencée pour extraire du matériau d'une zone inférieure dudit volume de contenant;
- un trajet de gaz (5) d'un écoulement d'un gaz de traitement permettant de traiter un matériau incohérent dans ledit volume de contenant;
- un déshumidificateur de gaz comprimé (6), c'est-à-dire un déshumidificateur conçu pour exploiter l'effet de déshumidification d'un gaz en comprimant puis en détendant ultérieurement le gaz, agencé dans ledit trajet de gaz (5) pour déshumidifier le gaz de traitement;
- un chauffage (9) agencé dans ledit trajet de gaz (5) pour chauffer le gaz de traitement à une température supérieure à 40 C;
- un conduit (12) agencé dans ledit volume de contenant pour transporter ledit écoulement d'un gaz de traitement et pourvu d'un diffuseur (13) agencé pour diffuser le gaz de traitement dans ledit volume de contenant de sorte que ledit diffuseur (13) peut être entouré par le matériau incohérent contenu dans ledit volume de contenant;
- une sortie de gaz (OUT) permettant d'extraire du gaz de traitement d'une zone dudit volume de contenant agencée au-dessus dudit diffuseur (13);
- un capteur d'odeur (14) agencé pour détecter des caractéristiques odorantes du gaz de traitement présent dans ledit volume de contenant et/ou du gaz de traitement extrait dudit volume de contenant;
- une unité de calcul configurée pour mettre en œuvre une comparaison entre des données détectées par ledit capteur d'odeur (14) et des données stockées et pour caractériser le matériau incohérent en fonction de ladite comparaison.

2. Appareil selon la revendication 1, dans lequel ledit conduit (12) s'étend avec un axe longitudinal qui est parallèle ou coïncidant avec ledit axe de contenant et/ou dans lequel ledit diffuseur (13) est agencé au niveau dudit axe de contenant.

3. Appareil selon la revendication 1 ou 2, dans lequel ledit déshumidificateur de gaz comprimé (6) est agencé avant ledit chauffage (9).

4. Appareil selon l'une quelconque des revendications précédentes, dans lequel ledit volume de contenant est compris entre 1 dm³ et 20 dm³.

5. Appareil selon l'une quelconque des revendications précédentes, dans lequel ledit déshumidificateur de gaz comprimé (6) est configuré pour déshumidifier le gaz de traitement jusqu'à une valeur de point de rosée inférieure à +15 C, ou inférieure à +5 C.

6. Appareil selon l'une quelconque des revendications précédentes, comprenant un filtre de purification (7) agencé dans ledit trajet de gaz (5) permettant de filtrer des composés organiques volatils dans le gaz de traitement jusqu'à une concentration en composés organiques volatils totaux (TVOC) inférieure à 30 ppm dans le gaz de traitement; ledit filtre de purification () étant, en particulier, agencé avant ledit déshumidificateur (6).

7. Appareil selon la revendication 6, dans lequel ledit filtre de purification (7) comprend un filtre à charbon actif ; ledit filtre de purification (7) comprenant, en particulier, un filtre à coalescence permettant de séparer des particules huileuses.

8. Appareil selon l'une quelconque des revendications précédentes, comprenant un filtre collecteur de poussière (8) agencé dans ledit trajet de gaz (5); ledit filtre collecteur de poussière (8) étant, en particulier, agencé avant ledit déshumidificateur (6).

9. Appareil selon l'une quelconque des revendications précédentes, dans lequel ledit volume de contenant est défini au moins en partie par au moins une paroi dudit contenant (2) fabriquée dans un matériau transparent, en particulier du verre.

10. Procédé d'analyse permettant d'analyser un matériau incohérent, en particulier recourant à un appareil d'analyse (1) selon l'une quelconque des revendications précédentes, ledit procédé comprenant les étapes consistant à:
- introduire un matériau incohérent dans un volume de contenant inférieur à 50 dm³;
- générer un écoulement d'un gaz de traitement le long d'un trajet de gaz (5) jusqu'à un diffuseur (13) agencé dans ledit volume de contenant et entouré par le matériau incohérent contenu dans ledit volume de contenant;
- déshumidifier le gaz de traitement le long dudit trajet de gaz (5) au moyen d'un déshumidificateur de gaz comprimé (6) qui fonctionne au moyen d'une compression et d'une détente ultérieure du gaz;
- chauffer le gaz de traitement le long dudit trajet de gaz (5) à une température supérieure à 40 C, en particulier supérieure à 80°C;
- extraire le gaz de traitement d'une zone dudit volume de contenant agencée au-dessus dudit diffuseur (13);
- détecter des caractéristiques odorantes du gaz de traitement présent dans ledit volume de contenant et/ou extrait dudit volume de contenant;
- comparer les caractéristiques odorantes détectées à des données stockées et caractériser le matériau incohérent en fonction de ladite comparaison.

11. Procédé selon la revendication 10, dans lequel ledit matériau incohérent comprend un matériau en plastique, en particulier du matériau en plastique comprenant du matériau en plastique au moins partiellement recyclé post-consommation, en particulier du matériau en plastique recyclé post-consommation sous forme de granulés.

12. Procédé selon la revendication 10 ou 11, comprenant l'étape de réduction de la concentration en composés organiques volatils dans le gaz de traitement le long dudit trajet de gaz jusqu'à une valeur de composés organiques volatils totaux inférieure à 30 ppm.

13. Procédé selon l'une quelconque des revendications 10 à 12, comprenant l'étape de filtrage du gaz de traitement le long dudit trajet de gaz pour éliminer des particules solides avec un diamètre aérodynamique supérieur à 10 µm.

14. Procédé selon l'une quelconque des revendications 10 à 13, dans lequel le gaz de traitement est déshumidifié par ledit déshumidificateur de gaz comprimé (6) jusqu'à une valeur de point de rosée inférieure à +15°C, ou inférieure à +5 C.
